# FASCICULE DE BREVET EUROPEEN

(11) **EP 0 954 689 B1**
(45) Date de publication et mention de la délivrance du brevet: **31.07.2002**
(21) Numéro de dépôt: 98907944.7
(22) Date de dépôt: 14.01.1998
(51) Int. Cl.: F02D 41/34, F02D 41/14

(54) **DISPOSITIF DE COMMANDE D'UN MOTEUR A COMBUSTION INTERNE A ALLUMAGE COMMANDE ET INJECTION DIRECTE**
STEUERVORRICHTUNG FÜR EINE BRENNKRAFTMASCHINE MIT GESTEUERTER ZÜNDUNG UND DIREKTER EINSPRITZUNG
DEVICE FOR CONTROLLING AN INTERNAL COMBUSTION ENGINE WITH CONTROLLED IGNITION AND DIRECT INJECTION

(30) Priorité: 20.01.1997 FR 9700648
(43) Date de publication de la demande: 10.11.1999
(73) Titulaire: Siemens VDO Automotive S.A.S., 31036 Toulouse cedex 01 (FR)
(72) Inventeur: SANS, Mariano, F-31700 Blagnac (FR)
(74) Mandataire: Berg, Peter
(86) Numéro de dépôt international: EP9800188
(87) Numéro de publication internationale: WO9831927

(56) Documents cités:
- EP-A- 0 491 381
- EP-A- 0 661 432
- WO-A-96/32579
- GB-A- 2 257 268

## Description

La présente invention concerne un dispositif de commande d'un moteur à combustion interne à allumage commandé et injection directe, en particulier à injection directe à haute pression.

Selon le document DE 42 32 974, un dispositif de commande pour un moteur à combustion interne à allumage commandé présente un dispositif de détermination d'un couple de rotation de consigne. Il comprend aussi un dispositif de détermination de l'angle d'ouverture du papillon des gaz qui détermine cette ouverture en fonction du couple de rotation de consigne. A cet effet, dans le dispositif de détermination de l'angle de papillon des gaz, il est prévu un modèle inverse de remplissage de la tubulure d'admission et du cylindre du moteur à combustion interne et une table des angles d'ouverture du papillon des gaz.

Dans la publication SAE 960465 « Gasoline direct injection : Actual trends and future strategies for injection and combustion systems », de G. K. Fraidl, W. F. Piock et M. Wirth, il est proposé de faire fonctionner un moteur à combustion interne à injection directe et allumage commandé, dans la gamme de charge partielle inférieure, selon un mode de combustion en mélange stratifié. A cet effet, on règle de préférence un rapport air/carburant > 100. Dans la gamme de charge partielle supérieure, il est proposé de faire fonctionner le moteur alternativement selon un mode de combustion en mélange homogène ou en mélange stratifié. Ainsi, un système de traitement ultérieur des gaz d'échappement, comme par exemple un catalyseur DeNox, peut être régénéré. Ainsi les valeurs limites d'émission légalement imposées peuvent être respectées.

Cependant, lors du changement de mode de combustion de mélange homogène à mélange stratifié et inversement, il peut se produire une variation brutale du couple sur l'arbre de sortie du moteur à combustion interne, qui conduit à une dégradation du confort de conduite.

L'objet de l'invention est de produire un dispositif de commande conçu de façon à minimiser cette variation de couple lors d'un changement de mode combustion de mélange homogène à mélange stratifié et inversement.
On atteint ce but au moyen d'un dispositif de commande d'un moteur à combustion interne à injection directe et allumage commandé, comportant des moyens de détermination d'une valeur de consigne d'un couple de transmission en fonction de la position d'une pédale d'accélérateur, des moyens de calcul de la valeur d'au moins une commande d'au moins un moyen de réglage du moteur à partir de la valeur de consigne du couple de transmission, les dits moyens de calcul comprenant un premier modèle inverse du moteur dans son mode de combustion en mélange homogène et un deuxième modèle inverse du moteur dans son mode de combustion en mélange stratifié, et des moyens de correction adaptés pour corriger la valeur de consigne du couple de transmission en fonction du mode de combustion du moteur par une correction de couple extraite d'une table de correction en fonction d'au moins une variable représentative de la charge du moteur.

Dans un mode de réalisation préférentielle de l'invention, le dispositif de commande présente un dispositif d'adaptation qui effectue une adaptation des valeurs de correction de couple dans la table de correction en fonction d'une variable de sortie du moteur à combustion interne. Ainsi les modifications du comportement effectif du moteur qui sont produites par des tolérances de fabrication ou un vieillissement du moteur peuvent être compensées.

Dans une autre réalisation avantageuse de l'invention, l'adaptation est effectuée à l'intérieur d'un intervalle de temps prédéterminé autour d'un changement de mode de combustion, de mélange homogène à mélange stratifié ou de mélange stratifié à mélange homogène.

D'autres caractéristiques et avantages du dispositif de commande suivant l'invention apparaîtront à la lecture de la description qui va suivre et à l'examen des dessins annexés dans lesquels:
- la figure 1 représente un dispositif de commande pour un moteur à combustion interne conforme à l'invention, et
- la figure 2, une seconde forme de réalisation du dispositif de commande conforme à l'invention.

Les éléments de construction identiques ou qui ont la même fonction sont désignés par la même référence sur tous les dessins.

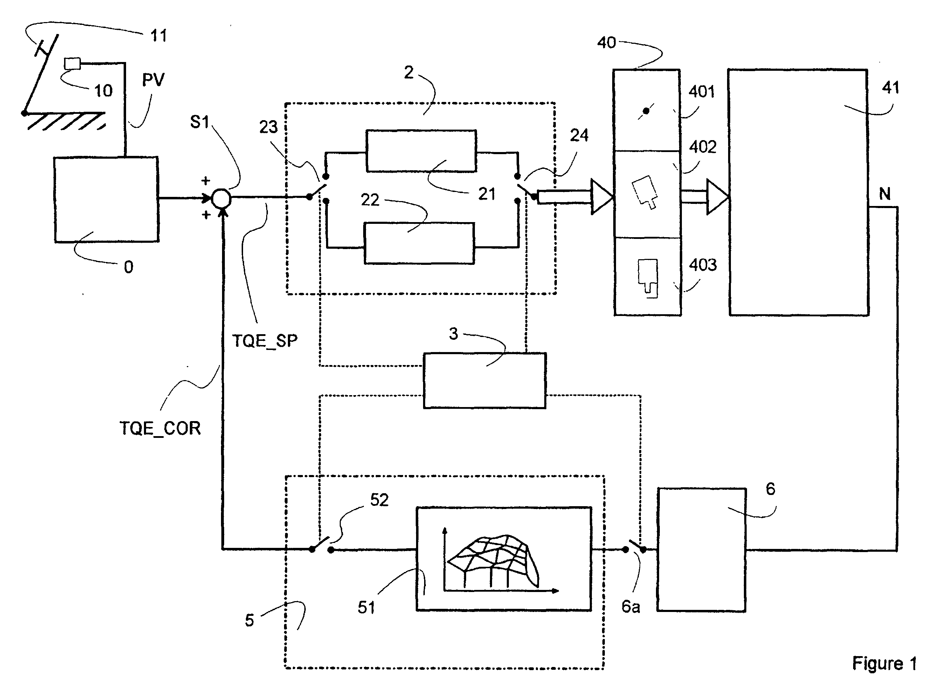

La figure 1 montre un dispositif de commande conforme à l'invention qui comprend des moyens de détermination 0 d'une valeur de consigne TQE_SP d'un couple de transmission. Un capteur de position 10 d'une pédale d'accélérateur 11 qui mesure la position PV de la pédale d'accélérateur est relié aux moyens de détermination 0. Les moyens de détermination 0 de la valeur de consigne du couple de transmission comprennent une table dans laquelle les valeurs de consigne pour le couple de transmission sont enregistrées en fonction au moins de la position de la pédale d'accélérateur. Les valeurs de consigne du couple de transmission peuvent aussi être mémorisées dans la table en fonction d'autres paramètres de fonctionnement comme par exemple le régime de rotation N du moteur et/ou la température de liquide de refroidissement. On peut également prévoir une correction de la valeur de consigne du couple de transmission en fonction de charges supplémentaires comme par exemple un alternateur ou une climatisation.

La valeur de consigne TQE_SP du couple de transmission est corrigée dans un premier sommateur S1 par une correction de couple TQE_COR qui est décrite plus loin. La valeur de consigne TQE_SP du couple de transmission est transmise à des moyens de calcul 2 qui comportent un premier modèle inverse 21 et un second modèle inverse 22 du moteur à combustion interne. Un tel modèle inverse comprend de préférence un modèle de remplissage de la tubulure d'admission tel que décrit par exemple dans le document WO 96/32579 dont le contenu est ainsi inclus ici par référence. En outre, un tel modèle inverse comprend un modèle de combustion dans les cylindres du moteur à combustion interne. Au moyen de ces premier et second modèles inverses 21, 22, on associe les valeurs de consigne TQE_SP du couple de transmission à différentes commandes de moyens de réglage d'un bloc de réglage 40 en tenant compte de la dynamique du circuit d'admission du moteur à combustion interne. Les valeurs des commandes de réglage sont définies par des mesures au banc d'essai du moteur.

Le bloc de réglage 40 comprend des moyens de réglage, à savoir un papillon des gaz 401, au moins un injecteur 402 et un dispositif d'allumage 403. Le bloc de réglage 40 peut éventuellement comporter d'autres moyens de réglage comme un automatisme de levée des soupapes ou un dispositif d'accord acoustique faisant varier la longueur effective du collecteur d'admission. Les moyens de réglage agissent sur le moteur à combustion interne 41 et commandent le couple qu'il délivre. Ces moyens de réglage peuvent ainsi, à titre d'exemple, être réalisés par des coupures d'injection lors d'une commutation de la combustion d'un mode stratifié en un mode homogène. Ces coupures peuvent être effectuées sur un ou plusieurs cylindres à la fois pendant l'intervalle de temps où le débit d'air entrant dans le cylindre est supérieur à celui souhaité.

Le dispositif de commande est prévu pour un moteur à combustion interne 41 à injection directe haute pression et allumage commandé. Dans chaque cylindre de ce type de moteur à combustion interne 41, aboutissent un injecteur 402 ainsi qu'une bougie faisant partie du dispositif d'allumage 403. On peut ainsi obtenir, pour un moteur à combustion interne de ce type, soit un mode de combustion homogène, c'est-à-dire une répartition régulière du combustible dans la chambre de combustion, soit un mode de combustion stratifié, c'est à dire uniquement une forte concentration locale de combustible, de préférence à proximité de la bougie.

En fonctionnement en charge partielle du moteur, l'utilisation d'un mode de combustion en mélange stratifié permet d'obtenir une réduction de consommation de carburant pouvant aller jusqu'à 30% par rapport à un moteur avec injection indirecte dans la tubulure d'admission, qui fonctionne en mélange homogène. Ceci est dû à une ouverture pratiquement complète du papillon des gaz 401 et à la réduction de pertes de pompage qui y sont liées. En outre, une combustion sûre est possible pour un fonctionnement avec un mélange stratifié même pour des faibles quantités de carburant lorsque le carburant est stratifié localement autour de la bougie. Le mélange stratifié est obtenue par l'intermédiaire d'une injection très tardive pendant le temps de compression du cylindre considéré. Pour un fonctionnement avec un mélange stratifié, le réglage du couple fourni par le moteur à combustion interne est effectué par la commande de la masse de carburant injectée à chaque cycle du cylindre considéré.

En mélange homogène, la commande du couple du moteur à combustion interne est effectuée par la masse d'air admise dans le cylindre à chaque cycle. En fonctionnement homogène, on peut avoir une valeur maximale du coefficient d'air λ = 1,5 pour une combustion sûre. Pour les valeurs λ > 1,5, une combustion sûre n'est plus garantie.

Des limitations telles que des problèmes de préparation du mélange, le confort de conduite et les émissions de polluants réglementées empêchent l'exploitation d'un moteur à combustion interne avec un mélange stratifié dans toutes les conditions de charge. De ce fait, à faible et moyenne charge, on fait fonctionner le moteur à combustion interne en mélange stratifié alors qu'à forte charge et en pleine charge, il fonctionne avec un mélange homogène. En outre, le moteur peut éventuellement fonctionner alternativement de façon temporaire en mélange stratifié et en mélange homogène à faible et moyenne charge, pour permettre la régénération d'un pot catalytique de stockage des oxydes d'azote.

Le changement de mode de combustion, de mélange homogène à mélange stratifié et inversement est commandé par un contrôleur 3. Le contrôleur 3 détermine si le moteur à combustion interne doit fonctionner en mélange stratifié ou en mélange homogène en fonction de la charge ou de l'état de saturation du pot catalytique de stockage des oxydes d'azote.

Le premier modèle inverse 21 du moteur à combustion interne représente le comportement du moteur à combustion interne pour un fonctionnement avec un mélange homogène alors que le second modèle inverse 22 représente le comportement du moteur à combustion interne pour un fonctionnement avec un mélange stratifié.

Le contrôleur 3 commande un premier commutateur 23 de manière à transmettre la valeur de consigne TQE_SP du couple de transmission au premier modèle inverse 21 lors d'un fonctionnement en mélange homogène, ou au second modèle inverse 22 lors d'un fonctionnement en mélange stratifié. De même, le contrôleur 3 commande un second commutateur 24 de façon à transmettre aux moyens de réglage 40 les valeurs de la sortie du premier modèle inverse 21 en fonctionnement en mélange homogène, ou les valeurs de la sortie du second modèle inverse 22 en fonctionnement en mélange stratifié.

Le premier et le second modèle inverse 21, 22 calculent au moins une valeur de commande pour au moins un moyen de réglage. La valeur de consigne TQE_SP du couple de transmission est transmise au modèle inverse 21, 22 respectif.

Le dispositif de commande comprend en outre des moyens de correction 5 qui corrigent la valeur de consigne TQE_SP du couple de transmission. Les moyens de correction 5 comportent une table de correction 51 dans laquelle sont inscrites des corrections de couple TQE_COR en fonction d'au moins une variable représentative de la charge du moteur. Les valeurs de la correction de couple TQE_COR sont calculées à partir de mesures effectuées sur un banc d'essai moteur en fonction des valeurs des variables représentatives de la charge du moteur. Ces variables représentatives de la charge du moteur peuvent être la pression d'admission, une masse d'air par course d'admission du cylindre, le régime de rotation N et un degré d'ouverture du papillon des gaz 401, une durée d'injection ou encore une combinaison de ces variables. A titre d'exemple, on pourra utiliser des tables bidimensionnelles adressables en fonction de la pression d'admission et du régime moteur.

Les moyens de correction 5 comprennent en outre un commutateur 52, qui en fonctionnement avec un mélange stratifié, relie la sortie de la table de correction 51 avec le premier sommateur S1. En fonctionnement avec un mélange homogène, le commutateur 52 est ouvert. C'est pourquoi la valeur de consigne TQE_SP du couple de transmission n'est pas corrigée avec la valeur de correction du couple moteur TQE_COR. De façon alternative au commutateur 52, on peut également prévoir un dispositif de commutation qui fournisse au premier sommateur S1 une valeur algébrique de la correction de couple TQE_COR dont le signe est fonction du mode de combustion du moteur.

Avantageusement, le dispositif de commande comporte aussi des moyens d'adaptation 6 qui comprennent un élément de retard non représenté auquel est transmise une variable de sortie du moteur à combustion interne 41. Dans les moyens d'adaptation 6, on forme la différence entre la valeur actuelle de la variable de sortie et la valeur fournie par l'élément de retard et on calcule par intégration de cette différence, une valeur d'adaptation avec laquelle, à un moment prédéterminé, par exemple après le changement d'un mode de combustion de mélange homogène à mélange stratifié ou inversement, on adapte la valeur de la correction de couple TQE_COR associée à la valeur actuelle de la variable représentative de la charge du moteur.

Il est avantageux de réaliser le calcul de la valeur d'adaptation dans un intervalle de temps prédéterminé autour d'un changement de mode de combustion de mélange homogène à mélange stratifié ou autour d'un changement de mode de combustion de mélange stratifié à mélange homogène. En particulier en charge partielle stabilisée, lors d'un changement de mode de combustion de mélange homogène à mélange stratifié et inversement, réalisé afin de régénérer le catalyseur, la variable de sortie est une mesure directe de la qualité de la correction de couple. En calculant ainsi, pendant cet intervalle de temps prédéterminé, une valeur d'adaptation de la correction de couple pour le point de fonctionnement en charge correspondant du moteur à combustion interne, les variations dues au vieillissement du moteur à combustion interne et les dispersions de série sont prises en compte. Un commutateur 6a, qui est fermé lors de l'adaptation d'une valeur de correction de couple TQE_COR, et qui est ouvert autrement, est associé aux moyens d'adaptation 6.

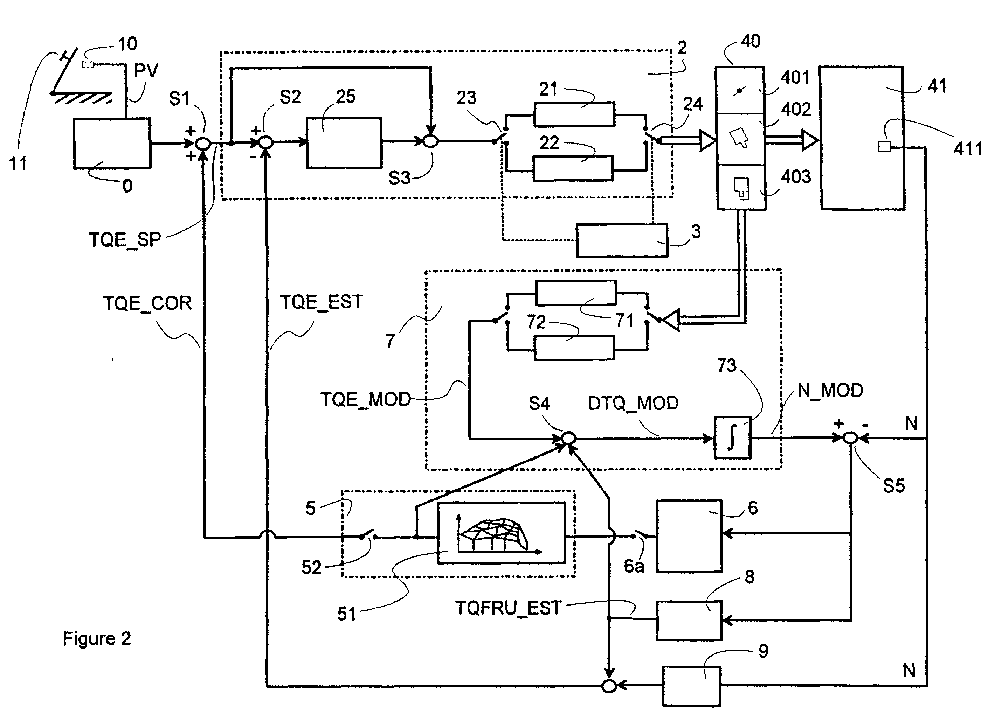

La figure 2 montre un second exemple de réalisation du dispositif de commande conforme à l'invention. Les moyens de calcul 2 comprennent un régulateur 25 dont la variable d'entrée est la différence, effectuée par le sommateur S2, entre la valeur de consigne TQE_SP et une valeur estimée TQE_EST du couple de transmission. Le calcul de la valeur estimée TQE_EST du couple de transmission est décrit plus loin. Le régulateur 25 peut être un régulateur proportionnel, intégral et dérivé, mais il peut aussi s'agir d'un régulateur d'un autre type, par exemple un régulateur non linéaire.

Dans un troisième sommateur S3, le signal de sortie du régulateur 25 est ajouté à la valeur de consigne TQE_SP du couple de transmission et fourni au premier modèle inverse 21 ou au second modèle inverse 22 en fonction de la position du premier commutateur 23. En fonction de la position du premier et du second commutateur 23, 24, le premier modèle inverse 21 ou le second modèle inverse 22 calcule les commandes des moyens de réglage du bloc de réglage 40.

Les commandes des moyens de réglage sont transmises à un observateur 7. De façon alternative, des valeurs mesurées des réglages effectués, obtenues par exemple par un capteur de position sur le papillon des gaz 401, sont transmises à l'observateur. L'observateur 7 présente un premier modèle 71 et un second modèle 72 du moteur à combustion interne . Le premier et le second modèle 71, 72 sont respectivement une inversion du premier et du second modèle inverse 21, 22. Le premier modèle 71 et le second modèle 72 calculent respectivement une valeur observée TQE_MOD du couple de transmission. On transforme ainsi les valeurs des commandes de réglage en une valeur observée TQE_MOD du couple de transmission par l'intermédiaire du premier modèle 71, lorsque la combustion est effectuée en mélange homogène, ou par l'intermédiaire du second modèle 72, lorsque la combustion est effectuée en mélange stratifié. De même que vu précédemment en relation avec les modèles inverses 21 et 22, des commutateurs non représentés sont prévus sur l'entrée et la sortie du premier et du second modèle 71, 72, qui activent le premier et le second modèle 71, 72 en fonction des signaux de commande du contrôleur 3.

Dans un sommateur S4, on soustrait à la valeur observée du couple de transmission TQE_MOD la correction de couple TQE_COR issue des moyens de correction 5 et une valeur estimée TQFRU_EST d'un couple résistant additionnel, comme par exemple le couple résistant généré par une variation du profil de la route ou par le vent. On obtient alors, à la sortie du sommateur S4, une valeur observée DTQ_MOD d'un couple disponible pour l'accélération. La valeur observée DTQ_MOD du couple disponible pour l'accélération est intégrée dans un intégrateur 73 et divisée par une valeur prédéterminée J d'un moment d'inertie du véhicule. La valeur J prédéterminée du moment d'inertie est stockée dans une mémoire ou peut être calculée en fonction de signaux de capteurs d'occupation des sièges ou de présence d'une remorque. La variable de sortie de l'intégrateur est le régime de rotation observé N_MOD.

Un capteur 411 de régime de rotation mesurant le régime de rotation N d'un vilebrequin du moteur à combustion interne 41 est associé au dispositif de commande selon l'invention. Le régime de rotation N représente la variable de sortie du moteur à combustion interne 41. La variable de sortie du moteur à combustion interne, dans une autre réalisation du dispositif de commande, peut aussi être une pression dans la chambre de combustion ou un couple mesuré sur l'arbre de sortie du moteur à combustion interne.

Dans un cinquième sommateur S5, la différence entre la vitesse de rotation observée N_MOD et la vitesse de rotation N est formée et transmise aux moyens d'adaptation 6. Cette différence est intégrée par les moyens d'adaptation 6, de préférence pendant l'intervalle de temps prédéterminé autour d'un changement de mode de combustion de mélange homogène à mélange stratifié ou inversement. A la fin de l'intervalle de temps prédéterminé, la somme de l'intégrale en sortie des moyens d'adaptation 6 et de la valeur TQE_COR de la correction de couple pour les conditions de charge actuellement effectives est mémorisée comme nouvelle valeur TQE_COR de la correction de couple dans la table de correction 51. A cet effet, il est prévu un commutateur 6a qui, en fonction de sa position, commandée par le contrôleur 3, relie ou non les moyens d'adaptation 6 aux moyens de correction 5.

La différence entre la vitesse de rotation observée N_MOD et la vitesse de rotation N est également transmise à des premiers moyens d'estimation 8 qui calculent, en dehors de l'intervalle de temps prédéterminé, une valeur estimée TQFRU_EST d'un couple résistant additionnel à partir d'une fraction proportionnelle, intégrale et dérivée de la variable d'entrée. La valeur estimée TQFRU_EST du couple résistant additionnel représente, comme on l'a vu plus haut, une estimation des pertes dues par exemple au frottement atmosphérique ou à une erreur lors de la modélisation des pertes du moteur à combustion interne. La valeur estimée TQFRU_EST doit de préférence rester constante pendant l'intervalle de temps prédéterminé.

Des seconds moyens d'estimation 9 calculent une valeur estimée TQE_EST du couple de transmission en fonction du régime de rotation N et de la valeur estimée TQFRU_EST du couple résistant additionnel. Les seconds moyens d'estimation 9 comprennent un dérivateur qui calcule la dérivée du régime de rotation N et donc une valeur estimée de l'accélération du véhicule. Cette valeur estimée de l'accélération est ensuite multipliée par la valeur prédéterminée J du moment d'inertie du véhicule donnant ainsi une valeur estimée pour un couple d'accélération qui est additionnée avec la valeur estimée TQFRU_EST du couple résistant additionnel afin d'obtenir une valeur estimée TQE_EST du couple de transmission.

## Revendications

1. Dispositif de commande d'un moteur à combustion interne (41) à injection directe et allumage commandé, comportant
• des moyens de détermination (0) d'une valeur de consigne (TQE_SP) d'un couple de transmission en fonction de la position (PV) d'une pédale d'accélérateur (11),
• des moyens de calcul (2) de la valeur d'au moins une commande d'au moins un moyen de réglage (40, 401, 402, 403) du moteur à partir de la valeur de consigne du couple de transmission, les dits moyens comprenant :
• un premier modèle inverse (21) du moteur dans son mode de combustion en mélange homogène
• un deuxième modèle inverse (22) du moteur dans son mode de combustion en mélange stratifié,
• des moyens de correction (5) adaptés pour corriger la valeur de consigne du couple de transmission en fonction du mode de combustion du moteur par une correction de couple (TQE_COR) extraite d'une table de correction (51) en fonction d'au moins une variable représentative de la charge du moteur.

2. Dispositif de commande selon la revendication 1, **caractérisé en ce qu'**il comporte en outre des moyens d'adaptation (6) propres à réaliser une adaptation des corrections de couple dans la table de correction en fonction d'une variable de sortie (N) du moteur.

3. Dispositif de commande selon la revendication 2, **caractérisé en ce que** ladite adaptation est réalisée dans un intervalle de temps prédéterminé autour d'un changement de mode de combustion, de mélange homogène à mélange stratifié et inversement.

4. Dispositif de commande selon la revendication 3, **caractérisé en ce qu'**il comporte en outre un observateur (7) qui fournit une valeur observée (N_MOD) de la variable de sortie du moteur en fonction d'au moins une commande de réglage du moteur, et **en ce que** les moyens d'adaptation réalisent l'adaptation en fonction d'une combinaison de la valeur observée et de la valeur mesurée (N) de la variable de sortie.

5. Dispositif de commande selon la revendication 4, **caractérisé en ce qu'**il comporte en outre des moyens d'estimation (8, 9) qui, en dehors de l'intervalle de temps prédéterminé autour d'un changement de mode de combustion, produisent une valeur estimée (TQFRU_EST) d'un couple résistant additionnel en fonction d'une combinaison de la valeur observée (N_MOD) et de la valeur mesurée (N) de la variable de sortie.

6. Dispositif de commande selon les revendications 4 ou 5, **caractérisé en ce que** ladite combinaison est la différence entre la valeur observée et la valeur mesurée de la grandeur de sortie.

7. Dispositif de commande selon l'une quelconque des revendications 2 à 6, **caractérisé en ce que** la variable de sortie est le régime de rotation (N) du moteur.

8. Dispositif de commande selon la revendication 5, **caractérisé en ce que** les moyens d'estimation (8, 9) produisent une valeur estimée (TQE_EST) du couple de transmission à partir du régime du moteur (N) et de la valeur estimée (TQFRU_EST) du couple résistant additionnel.

9. Dispositif de commande selon la revendication 5, **caractérisé en ce que** l'observateur (7) fournit une valeur observée (N_MOD) de la variable de sortie du moteur qui est en outre fonction de la valeur estimée (TQFRU_EST) du couple résistant additionnel.

10. Dispositif de commande selon la revendication 8, **caractérisé en ce que** les moyens de calcul (2) comportent un régulateur (25) dont la variable d'entrée est la différence entre la valeur de consigne (TQE_SP) et la valeur estimée (TQE_EST) du couple de transmission.

## Patentansprüche

1. Vorrichtung zum Steuern einer Brennkraftmaschine (41) mit Direkteinspritzung und gesteuerter Zündung, mit:
Mitteln zum Bestimmen (O) eines Sollwertes (TQE_SP) eines Übertragungsmomentes in Abhängigkeit von der Position (PV) eines Beschleunigerpedals (11),
Mitteln zum Berechnen (2) des Wertes mindestens eines Steuerbefehls für mindestens ein Regelmittel (40, 401, 402, 403) der Brennkraftmaschine ausgehend von dem Sollwert des Übertragungsmoments, wobei diese Mittel aufweisen:
ein erstes Inversionsmodell (21) der Brennkraftmaschine in ihrem Betriebszustand mit Verbrennung eines homogenen Gemischs,
ein zweites Inversionsmodell (22) der Brennkraftmaschine in ihrem Betriebszustand mit Verbrennung eines geschichteten Gemischs,
Korrekturmitteln (5) zum Korrigieren des Sollwertes des Übertragungsmoments in Abhängigkeit von dem Betriebszustand der Brennkraftmaschine durch eine Momentenkorrektur (TQE_COR), die einer Korrekturtabelle (51) in Abhängigkeit von mindestens einer die Motorlast darstellenden Veränderlichen entnommen wird.

2. Steuervorrichtung nach Anspruch 1, **dadurch gekennzeichnet, dass** sie ferner Adaptionsmittel (6) zum Ausführen einer Adaption der Momentenkorrektur in der Korrekturtabelle in Abhängigkeit von einer Ausgangsveränderlichen (N) der Brennkraftmaschine aufweist.

3. Steuervorrichtung nach Anspruch 2, **dadurch gekennzeichnet, dass** die Adaption in einem vorgegebenen Zeitintervall um eine Änderung des von einem homogenen Betrieb zu einem Schichtbetrieb und umgekehrt durchgeführt wird.

4. Steuervorrichtung nach Anspruch 3, **dadurch gekennzeichnet, dass** sie ferner einen Beobachter (7) aufweist, der einen beobachteten Wert (N-M_MOD) der Ausgangsveränderlichen der Brennkraftmaschine in Abhängigkeit von mindestens einem Steuerbefehl für die Regelung der Brennkraftmaschine liefert; und dass die Adaptionsmittel die Adaption in Abhängigkeit von einer Kombination des beobachteten Wertes und des gemessenen Wertes (N) der Ausgangsveränderlichen verwirklichen.

5. Steuervorrichtung nach Anspruch 4, **dadurch gekennzeichnet, dass** sie ferner Schätzmittel (8, 9) aufweist, die außerhalb des vorgegebenen Zeitintervalls um eine Änderung der Betriebsart einen Schätzwert (TQFRU_EST) eines zusätzlichen Widerstandsmomentes in Abhängigkeit von einer Kombination des beobachteten Wertes (N_MOD) und des gemessenen Wertes (N) der Ausgangsveränderlichen erzeugen.

6. Steuervorrichtung nach Anspruch 4 oder 5, **daduch gekennzeichnet, dass** die Kombination die Differenz zwischen dem beobachteten Wert und dem gemessenen Wert Ausgangsgröße ist.

7. Steuervorrichtung nach einem der Ansprüche 2 bis 6, **dadurch gekennzeichnet, dass** die Ausgangsveränderliche die Drehzahl (N) der Brennkraftmaschine ist.

8. Steuervorrichtung nach Anspruch 5, **dadurch gekennzeichnet, dass** die Schätzmittel (8, 9) einen Schätzwert (TQE_EST) des Übertragungsmomentes ausgehend von der Drehzahl (N) der Brennkraftmaschine und dem Schätzwert (TQFRU_EST) des zusätzlichen Widerstandsmomentes erzeugen.

9. Steuervorrichtung nach Anspruch 5, **dadurch gekennzeichnet, dass** der Beobachter (7) einen beobachteten Wert (N-MOD) der Ausgangsveränderlichen der Brennkraftmaschine liefert, der außerdem von dem Schätzwert (TQFRU_EST) des zusätzlichen Widerstandsmomentes abhängt.

10. Steuervorrichtung nach Anspruch 8, **dadurch gekennzeichnet, dass** die Rechnermittel (2) einen Regler (25) aufweisen, dessen Eingangsveränderliche die Differenz zwischen dem Sollwert (TQE_SP) und dem Schätzwert (TQE_EST) des Übertragungsmomentes ist.

## Claims

1. Control device for an internal combustion engine (41) that operates by direct injection and spark ignition, comprising
• a means for determining (0) a setpoint value (TQE_SP) for a transmission torque by reference to the position (PV) of an accelerator pedal (11),
• a means for calculating (2) the value of at least one control of at least one means of adjusting (40, 401, 402, 403) the engine by reference to the setpoint value of the transmission torque, the said means of calculation including:
• a first reverse model (21) of the engine in its homogeneous mixture combustion mode
• a second reverse model (22) of the engine in its stratified mixture combustion mode,
• a means of correction (5) suitable for correcting the transmission torque setpoint value by reference to the engine combustion mode by using a torque correction (TQE_COR) extracted from a correction table (51) by reference to at least one variable representing the engine load.

2. Control device according to Claim 1, **characterised in that** it also includes a means of adaptation (6) suitable for adapting the torque correction values in the correction table by reference to an output variable (N) from the engine.

3. Control device according to Claim 2, **characterised in that** the said adaptation is carried out in a predetermined period of time around a change in combustion mode from homogeneous mixture to stratified mixture and vice versa.

4. Control device according to Claim 3, **characterised in that** it also includes an observing device (7) which delivers an observed value (N_MOD) for the engine output variable by reference to at least one engine adjustment control, and **characterised in that** the adaptation means carries out the adaptation by reference to a combination of the observed value and the measured value (N) of the output variable.

5. Control device according to Claim 4, **characterised in that** it also includes means of estimation (8, 9) which, outside the predetermined period of time around a change in combustion mode, produce an estimated value (TQFRU_EST) of an additional resisting torque on the basis of a combination of the observed value (N_MOD) and the measured value (N) of the output variable.

6. Control device according to Claim 4 or 5, **characterised in that** the said combination is the difference between the observed value and the measured value of the output quantity.

7. Control device according to any of Claims 2 to 6, **characterised in that** the output variable is the engine revolution regime (N).

8. Control device according to Claim 5, **characterised in that** the means of estimation (8, 9) produce an estimated value (TQE_EST) of the transmission torque by reference to the engine regime (N) and the estimated value (TQFRU_EST) of the additional resisting torque.

9. Control device according to Claim 5, **characterised in that** the observing device (7) delivers an observed value (N_MOD) for the engine outputvariable which is also a function of the estimated value (TQFRU_EST) of the additional resisting torque.

10. Control device according to Claim 8, **characterised in that** the means of calculation (2) includes a control unit (25), the input variable of which is the difference between the setpoint value (TQE_SP) and the estimated value (TQE_EST) for the transmission torque.
